(19) Europäisches Patentamt
European Patent Office
Office européen des brevets

(11) EP 3 770 227 A1

(12) **EUROPEAN PATENT APPLICATION**

(43) Date of publication:
**27.01.2021 Bulletin 2021/04**

(21) Application number: **19187947.7**

(22) Date of filing: **23.07.2019**

(51) Int Cl.:
*C09J 7/26* (2018.01) *C09J 7/38* (2018.01)
*C09J 7/35* (2018.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SIKA TECHNOLOGY AG**
**6340 Baar (CH)**

(72) Inventors:
- **Frick, Karsten**
  **5453 Remetschwil (CH)**
- **Schumacher, Silvia**
  **5621 Zufikon (CH)**
- **Pasula, Sascha**
  **8800 Thalwil (CH)**

(74) Representative: **Sika Patent Attorneys**
**c/o Sika Technology AG**
**Corp. IP Dept.**
**Tüffenwies 16**
**Postfach**
**8048 Zürich (CH)**

# (54) SHAPE MEMORY MATERIAL AND USE THEREOF FOR BONDING OF SUBSTRATES

(57) The invention is directed to an adhesive article (1) comprising an expandable layer (2) composed of a shape memory polymer composition comprising a first curable adhesive and at least one thermoplastic elastomer and a first adhesive layer (3) covering at least a portion of the first major surface of the expandable layer (2), wherein the shape memory polymer composition is in a temporary deformed shape. The invention is also directed to a method for producing an adhesive article, to a method for bonding two substrates to each other, and to a two-part bonded assembly (6) comprising a first substrate (4) and a second substrate (5) and adhesive article (1) between the substrates.

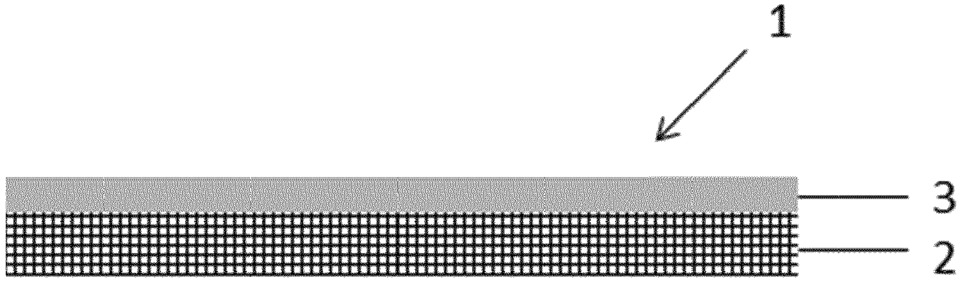


Fig. 1

EP 3 770 227 A1

## Description

### Technical field

The invention relates to expandable adhesive compositions, which are used for bonding of substrates separated by a gap from each other. In particular, the invention relates to expandable adhesive compositions, which can be expanded into a desired direction to fill the gap between the substrates without the use of physical or chemical blowing agents.

### Background of the invention

Structural adhesives have been widely used for bonding of components composed of similar or different materials, such as metals and/or plastics, for example in automotive and aircraft industries. Structural adhesives have also been used to replace or reduce welding or to supplement strength, stiffness and fatigue durability of sections that have been spot welded. In some cases the adhesive should also be able provide a bond across a gap formed between two substrates to be bonded to each other. In such cases it has been proposed to use expandable structural adhesive compositions, which are placed between the substrates and foamed upon activation, for example by heat, to fill the gap between the substrates and to simultaneously develop a high strength adhesive bond between the substrates. Expandable structural adhesives, also known as "structural foams", are known to have the disadvantage that that the strength of the adhesive bond is typically negatively affected by the foaming process due to the introduction of porosity into the foamed material.

Shape memory polymers are polymer compositions, which can be mechanically deformed from a permanent (original) shape into a dimensionally stable temporary shape and brought back to the permanent non-deformed shape by a shape memory effect induced by an external stimulus, for example, by heating the composition to an elevated temperature. Shape memory polymer compositions typically comprise a molecular network structure containing at least one soft (switch) segment and at least one hard segment, which can be deformed under tension. In case of a thermally induced shape memory recovery, the switch from the temporary shape to the permanent shape can be conducted by raising the temperature of the composition above the transition temperature ($T_{trans}$) of the soft segments. Shape memory polymer compositions comprising a thermally curable structural adhesive and at least one thermoplastic elastomer have already been suggested for use in providing reinforcing elements for reinforcing of cavities and hollow structural elements in manufactured articles such as automotive vehicles. In these uses, the shape memory polymer composition is inserted into a cavity of the structural component in a deformed shape, expanded upon heating to a temperature above the transition temperature of the composition, and finally cured by heating above the activation temperature of the structural adhesive.

The shape memory polymer compositions containing a curable structural adhesive have the advantage over conventional structural foams that the mechanical properties of the structural adhesive are well preserved since the expansion of the material is conducted without introduction of porosity into the expanded material. However, it has also been turned out that the shape memory polymer compositions of prior art are less suitable for bonding of typical substrates used in automotive industry since they exhibit only a low bonding to metal surfaces, in particular oily metal surfaces.

There thus remains a need for a novel type of expandable adhesive article, which can fill a pre-defined gap provided between substrates to be bonded to each other and simultaneously develop a high strength adhesive bond between the opposing surfaces of the substrates.

### Summary of the invention

The object of the present invention is to provide an adhesive article, which is able to solve or at least partially mitigate the problems related to the State-of-the-Art expandable structural adhesives.

The subject of the present invention is an adhesive article as defined in claim 1.

It was surprisingly found out that an adhesive article comprising an expandable layer composed of a shape memory polymer composition and an adhesive layer composed of a curable epoxy resin composition can be used for high strength bonding of spaced apart substrates to each other.

One of the advantages of the adhesive article of the present invention is that due to the high strength bonding properties, the adhesive article can be used to replace or reduce welding or to supplement strength, stiffness and fatigue durability of sections that have been spot welded welding in assembly of manufactured articles, in particular in automotive manufacture.

Other aspects of the present invention are presented in other independent claims. Preferred aspects of the invention are presented in the dependent claims.

**Brief description of the Drawings**

Figure 1 shows a cross-section of an adhesive article (1) of the present invention comprising an expandable layer (2) composed of a shape memory polymer composition in a temporary deformed shape and a first adhesive layer (3) covering substantially the entire area of the first major surface of the expandable layer (2).

Figure 2 shows a cross-section of an adhesive article (1) of the present invention comprising an expandable layer (2) composed of a shape memory polymer composition in a temporary deformed shape and a first adhesive layer (3) covering substantially the entire area of the first major surface of the expandable layer (2) and a second adhesive layer (3') covering substantially the entire area of the second major surface of the expandable layer (2).

Figure 3 shows a cross-section of an adhesive article (1) of Figure 1 after the expandable layer (2) has been expanded. In this case, the adhesive article (1) comprises an expanded layer (2') composed of the shape memory polymer composition in an original non-deformed shape and a first adhesive layer (3) covering substantially the entire area of the first major surface of the expanded layer (2').

Figure 4 shows a cross-section of a two-part bonded assembly (6) comprising a first substrate (4) and a second substrate (5) and an adhesive article (1) of Figure 1 provided between the first and second substrates (4, 5), wherein the first substrate (4) and the second substrate (5) are adhesively bonded to each other over at least part of their opposing surfaces via the adhesive article (1).

Figure 5 shows a cross-section of a two-part bonded assembly (6) comprising a first substrate (4) and a second substrate (5) and an adhesive article (1) of Figure 2 provided between the first and second substrates (4, 5), wherein the first substrate (4) and the second substrate (5) are adhesively bonded to each other over at least part of their opposing surfaces via the adhesive article (1).

**Detailed description of the invention**

The subject of the present invention is an adhesive article (1) comprising an expandable layer (2) having a first and a second major surface and a first adhesive layer (3) covering at least a portion of the first major surface of the expandable layer (2), wherein the expandable layer is composed of a shape memory polymer composition comprising:

a) A first curable adhesive comprising:

a1) At least one epoxy resin **A1** having an average of more than one epoxy group per molecule and
a2) At least one latent hardener **B1** for epoxy resins, and

b) At least one thermoplastic elastomer **TPE,** and

wherein the shape memory polymer composition is in a temporary deformed shape.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "a-olefin" designates an alkene having the molecular formula $C_xH2_x$ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "thermoplastic" refers to any material which can be melted and resolidified with little or no change in physical properties.

The term "elastomer" refers to any polymer or combination of polymers, which is capable of recovering from large deformations. Typical elastomers are capable of being elongated or deformed to at least 200% of their original dimension under an externally applied force, and will substantially resume the original dimensions, sustaining only small permanent set (typically no more than about 20%), after the external force is released. As used herein, the term "elastomer" may be used interchangeably with the term "rubber."

The term "molecular weight" refers to the molar mass (g/mol) of a molecule or a part of a molecule, also referred to as "moiety". The term "average molecular weight" refers to number average molecular weight ($M_n$) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and tetrahydrofurane as a solvent, at a temperature of 35°C.

The term "glass transition temperature" ($T_g$) refers to the temperature above which temperature a polymer component becomes soft and pliable, and below which it becomes hard and glassy. The glass transition temperature ($T_g$) is preferably determined by dynamical mechanical analysis (DMA) as the peak of the measured loss modulus (G") curve using a rheometer in torsional mode (with cyclic torsional load) with an applied frequency of 1 Hz and a strain level (amplitude) of 1 %.

The term "softening point" refers to a temperature at which compound softens in a rubber-like state, or a temperature at which the crystalline portion within the compound melts. The softening point is preferably determined by Ring and Ball measurement conducted according to DIN EN 1238 standard.

The term "melting temperature" refers to a temperature at which a material undergoes transition from the solid to the liquid state. The melting temperature ($T_m$) is preferably determined by differential scanning calorimetry (DSC) according to ISO 11357 standard using a heating rate of 2 °C/min. The measurements can be performed with a Mettler Toledo DSC 3+ device and the $T_m$ values can be determined from the measured DSC-curve with the help of the DSC-software. In case the measured DSC-curve shows several peak temperatures, the first peak temperature coming from the lower temperature side in the thermogram is taken as the melting temperature ($T_m$).

The "amount or content of at least one component X" in a composition, for example "the amount of the at least one thermoplastic elastomer" refers to the sum of the individual amounts of all thermoplastic elastomers contained in the composition. For example, in case the composition comprises 20 wt.-% of at least one thermoplastic elastomer, the sum of the amounts of all thermoplastic elastomers contained in the composition equals 20 wt.-%.

The term "room temperature" designates a temperature of 23°C.

The adhesive article of the present invention preferably has a three-dimensional extent, more preferably having a sheet-like form, more particularly being in form of a strip or a sheet or a patch. The adhesive article comprises an expandable layer and a first adhesive layer covering at least a portion of the first major surface of the expandable layer. The term "layer" refers to a three-dimensional structure having two dimensions (length, width) that are substantially greater than the third dimension (thickness). The term "major surface" refers to top and bottom surfaces of a sheet-like element defining a thickness of the element there between.

The expandable layer of the adhesive article is composed of a shape memory polymer composition in a temporary deformed shape. The term "shape memory polymer composition" designates in the present disclosure polymer compositions, which can be mechanically deformed from an original (permanent) shape into a dimensionally stable temporary shape and brought back to the original non-deformed shape by a shape memory effect induced by an external stimulus, such as heating the composition to an elevated temperature. The term "original shape" refers to the shape of the composition before the composition has been mechanically deformed to the temporary shape. The return from the dimensionally stable temporary shape to the permanent non-deformed shape is also known as "shape memory recovery". The difference between conventional elastic recovery and shape memory recovery is that the composition is dimensionally stable in the temporary shape, i.e. the composition remains in the deformed shape after the external force used for conducting the deformation has been removed. Typically, the induced shape memory recovery from the temporary shape does not always result in 100 % recovery of the original shape, in which the composition was provided before it was deformed to the temporary shape. In particular, the shape memory recovery values tend to decrease in the course of consecutive shape memory cycles, in another words, the "original shape" does not remain constant in consecutive shape memory cycles. It is, however, clear to a person skilled in the art that a polymer composition qualifies as a shape memory polymer composition even if the induced return from the temporary deformed shape does not result in 100 % recovery of the original non-deformed shape.

Shape memory polymer compositions typically comprise a molecular network structure with at least one soft (switch) segment and at least one hard segment, which can be deformed under tension. In case of a thermally induced shape memory recovery, the switch from the temporary shape to the permanent shape is conducted by increasing the temperature of the composition above the transition temperature ($T_{trans}$) of the soft segments. Depending on the characteristics of the shape memory composition, the transition temperature ($T_{trans}$) of the soft segments can be a glass transition temperature ($T_g$) or a melting temperature ($T_m$). Since the flexibility of the soft segments is at least partially

limited at temperatures below the transition temperature ($T_{trans}$), the deformed material can be fixed to its temporary shape by lowering the temperature below the transition temperature ($T_{trans}$).

Preferably, the shape memory polymer composition used in the adhesive article of the present invention is capable of undergoing a thermally induced shape memory recovery. The ability of the shape memory polymer composition to undergo a thermally induced shape memory recovery is based on the induced changes in thermodynamic states of the high molecular weight polymers contained in the shape memory polymer composition. In the original shape of the composition, the molecular chains of the at least one thermoplastic elastomer adopt conformations with the highest entropy, that is, the molecular chains are in a thermodynamically stable state. Upon heating above the $T_{trans}$ of the shape memory polymer composition, the chain mobility is significantly increased. Mechanical deformation of the shape memory polymer composition forces the molecular chains of the at least one elastomer to adopt a lower entropy (orientated) state. When the shape memory polymer composition is then cooled below the $T_{trans}$ of the composition, the lower entropy state and the deformed temporary shape of the composition are kinetically trapped due to the freezing of the molecular chains. Upon reheating of the shape memory polymer composition above its $T_{trans}$, the molecular mobility is re-activated, which allows the molecular chains of the at least one elastomer to return to their highest entropy state, which results in recovery of the permanent shape. In case of the present invention, the $T_{trans}$ of the shape memory polymer composition equals to the glass transition temperature ($T_g$) or the melting temperature ($T_m$) of the first curable adhesive.

The at least one thermoplastic elastomer can be present in the shape memory polymer composition either in a relaxed or in a strained (orientated) state depending on whether the composition is provided in an original non-deformed shape or in a temporary deformed shape. In an original non-deformed shape, the at least one thermoplastic elastomer is present in the shape memory polymer composition in a relaxed state. When the shape memory polymer composition is mechanically deformed from the original non-deformed shape to a temporary deformed shape, the molecular chains of the at least one thermoplastic elastomer are orientated and the at least one thermoplastic elastomer is converted from the relaxed state to a strained state. The mechanical deformation of the shape memory polymer composition has to be conducted under tension of the at least one elastomer in order to orientate the molecular chains of the at least one thermoplastic elastomer. Consequently, the temperature of the shape memory polymer composition during the mechanical deformation step has to be selected such that the at least one thermoplastic elastomer maintains its physically crosslinked molecular structure, i.e. the temperature has to be below the melting temperature of the at least one thermoplastic elastomer. Depending on the direction of deformation, the at least one elastomer can be converted into a compressed or elongated state.

The at least one thermoplastic elastomer is present in the expandable layer in a strained state, which enables the shape memory polymer composition to return from its temporary deformed shape to an original non-deformed shape upon heating the composition to a temperature above the $T_g$ or $T_m$ of the first curable adhesive. Preferably, the at least one thermoplastic elastomer **TPE** is present in the expandable layer in a compressed state. In this case, the relaxation of the orientation of the molecular chains of the at least one thermoplastic elastomer causes the composition to shrink in one direction and to increase in thickness in a transverse direction, i.e. to expand in the direction of the thickness.

The shape memory polymer composition comprises, in addition to the at least one thermoplastic elastomer, a first curable adhesive. The term "curable adhesive" refers in the present disclosure to adhesive compositions which develop bonding properties as a result of curing. The term "curing" refers in the present disclosure to the chemical reactions comprising forming bonds resulting, for example, in chain extension and/or crosslinking of polymer chains. In particular the term "curable adhesive" refers to reactive adhesive compositions, which can still be cured by initiation of the curing reactions. These types of curable adhesives are mechanically deformable under above the glass transition temperature ($T_g$) of the curable adhesive.

Preferably, the first curable adhesive has a crosslinking degree of not more than 5 %, more preferably not more than 2.5 %, even more preferably not more than 1 %, still more preferably not more than 0.1 %, most preferably 0 %. The term "crosslinking degree" refers in the present disclosure to a proportion of the component, which is insoluble in boiling xylene. The percentage of insoluble proportion can be determined by refluxing a test specimen in boiling xylene, weighting the dried residue and making suitable corrections for other soluble and insoluble components present in the tested composition. The crosslinking degree is preferably measured by using a method as defined in ISO 10147 standard.

According to one or more embodiments, the shape memory polymer composition contains a semi-interpenetrating polymer network (S-IPN) consisting of a first continuous phase comprising the first curable adhesive and a second continuous phase comprising the at least one thermoplastic elastomer **TPE.** The term "semi-interpenetrating polymer network (S-IPN)" refers to a polymer network comprising two or more polymers, wherein at least one of the polymers is in network form, i.e. chemically or physically crosslinked, and at least one of the polymers is not in network form, i.e. non-crosslinked. According to one or more embodiments, the first continuous phase is composed of the first curable adhesive and the second continuous phase is composed of the at least one thermoplastic elastomer **TPE.**

It may also be preferred that the first curable adhesive and the at least one thermoplastic elastomer **TPE** are present in the composition as a co-continuous phase. The term "co-continuous phase" refers in the present document to a morphology in which a continuous boundary line is formed between the two phases instead of island-like dispersion

of the first phase in second continuous phase or island-like dispersion of the second phase in the continuous first phase. The term "continuous phase" refers in the present document to a phase, which contains at least one connected path of material points lying entirely within that phase and that spans macroscopically ("percolates") across the material sample.

Preferably, the at least one thermoplastic elastomer has a melting temperature ($T_m$), which is above the glass transition temperature ($T_g$) of the first curable adhesive, wherein the melting temperature is determined by differential scanning calorimetry (DSC) according to ISO 11357 standard using a heating rate of 2 °C/min and the glass transition temperature is determined by dynamical mechanical analysis (DMA) as the peak of the measured loss modulus (G") curve using a rheometer in torsional mode (with cyclic torsional load) with an applied frequency of 1 Hz and a strain level (amplitude) of 1 %.

According to one or more embodiments, the first curable adhesive has a glass transition temperature ($T_g$) determined by dynamical mechanical analysis (DMA) as the peak of the measured loss modulus (G") curve using a rheometer in torsional mode (with cyclic torsional load) with an applied frequency of 1 Hz and a strain level (amplitude) of 1 % in the range of 23 - 105 °C, preferably 30 - 95 °C, more preferably 35 - 90 °C, even more preferably 35 - 85 °C, still more preferably 35 - 75 °C. This enables storing of the adhesive article having the shape memory polymer composition in a deformed temporary shape at normal room temperatures or somewhat below normal room temperature.

According to one or more embodiments, the at least one thermoplastic elastomer **TPE** has a melting temperature ($T_m$) determined by differential scanning calorimetry (DSC) according to ISO 11357 standard using a heating rate of 2 °C/min in the range of 60 - 200°C, preferably 70 - 160°C, more preferably 80 - 140 °C, even more preferably 85 - 120°C, still more preferably 85 - 110 °C.

According to one or more embodiments, the first and second curable adhesives are thermally curable structural adhesives.

The term "structural adhesive" refers in the present disclosure to adhesives, which can be used in a structure having structural integrity that is maintained with both welded joints and adhesive bonds made using the structural adhesive or with such adhesive bonds only. Structural adhesives are commonly used, for example, in the automotive industry. The term "thermally curable adhesive" refers to adhesives, in which the curing reaction is initiated by increasing the temperature of the adhesive (above the curing temperature). Such adhesives are known to a person skilled in the art and they typically contain one or more heat-activatable curing agents and optionally one or more accelerators for the curing agents. Preferably, the thermally curable adhesive has an activation temperature, i.e. a curing temperature, in the range of from 120 to 220 °C, more preferably from 160 to 200 °C.

The first curable adhesive contained in the shape memory polymer composition comprises at least one epoxy resin **A1** having an average of more than one epoxy group per molecule and at least one latent hardener **B1** for epoxy resins.

The epoxy group preferably takes the form of a glycidyl ether group. The at least one epoxy resin **A1** having an average of more than one epoxy group per molecule is preferably a solid epoxy resin or a mixture of solid and liquid epoxy resins. The term "solid epoxy resin" is very familiar to the person skilled in the art of epoxies and is used by contrast to "liquid epoxy resins". The glass transition temperature of solid resins is above room temperature, meaning that they can be comminuted at room temperature to give pourable powders.

Preferred solid epoxy resins having average of more than one epoxy group per molecule have the formula (I).

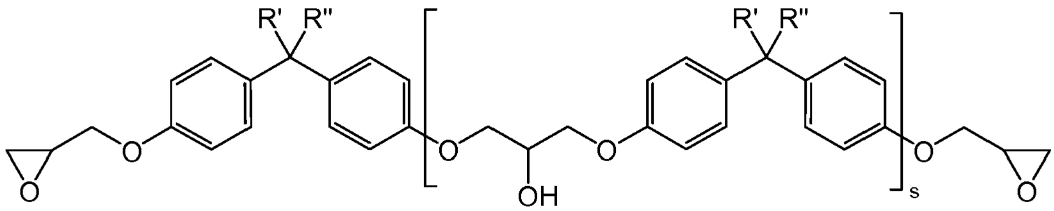

(I)

Here, the substituents R' and R" represent independently from one another either H or $CH_3$. Furthermore, the index s has a value of ≥ 1, in particular of ≥ 1.5, preferably of 2 to 12.

Suitable solid epoxy resins are commercially available, for example, from Dow Chemical Company, from Huntsman International LLC, from Hexion Specialty Chemicals Inc., and from Momentive Specialty Chemicals Inc.

Compounds of the formula (I) having an index s in the range from greater than 1 to 1.5 are referred to by the person skilled in the art as semisolid epoxy resins. For the present disclosure, they are likewise considered to be solid epoxy resins.

Preferred liquid epoxy resins having an average of more than one epoxy group per molecule, which, in particular, can be used together with solid epoxy resins of formula (I), have the following formula (II).

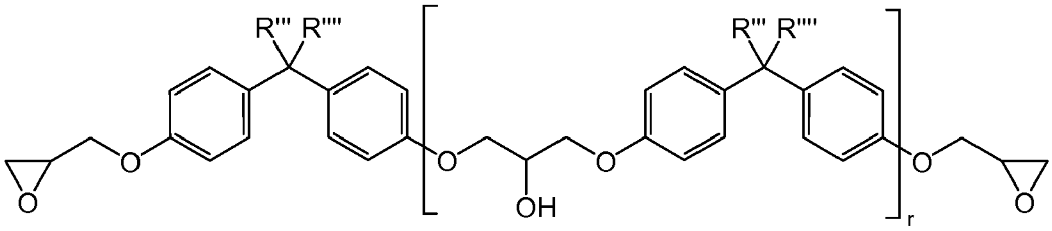

(II)

Here, the substituents R' and R" represent independent from one another either H or $CH_3$. Furthermore, the index r has a value of 0 to 1. Preferably, r has a value of 0 to less than 0.2.

The liquid epoxy resins are thus preferably diglycidyl ethers of bisphenol A (DGEBA), of bisphenol F and of bisphenol A/F (the expression 'A/F' refers here to a mixture of acetone with formaldehyde which is used as a reactant in the preparation thereof). Suitable liquid epoxy resins are commercially available, for example, under the trade names of Araldite® GY 250, Araldite® PY 304, and Araldite® GY 282 (from Huntsman International LLC), and under the trade names of D.E.R.® 331 or D.E.R.® 330 (from Dow Chemical Company), and under the trade names of Epikote® 828 or Epikote® 862 (from Hexion Specialty Chemicals Inc.).

Further suitable solid epoxy resins having an average of more than one epoxy group per molecule are so-called epoxy novolac resins. Particularly preferred epoxy novolac resins have the following formula (III).

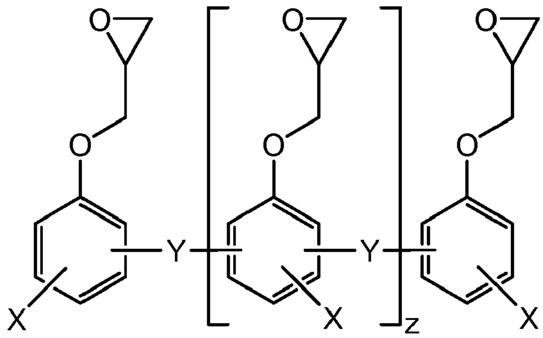

(III)

Here, the moiety X represents a hydrogen atom or a methyl group. The moiety Y represents $-CH_2-$ or a moiety of the formula (IV).

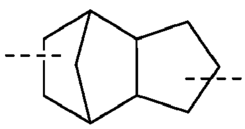

(IV)

Furthermore, the index z represents a value of 0 to 7, in particular a value of ≥ 3. In particular, these are phenol or cresol novolacs (Y represents $-CH_2-$).

Such epoxy novolac resins are commercially available, for example, under the trade names of EPN®, ECN®, and Tactix® 556 (from Huntsman International LLC) and under the trade name of D.E.N® (from Dow Chemical Company).

According to one or more embodiments, the shape memory polymer composition comprises the at least one epoxy resin **A1** in an amount of 20 - 75 wt.-%, preferably 25 - 65 wt.-%, more preferably 30 - 60 wt.-%, even more preferably 30 - 55 wt.-% of the total weight of the shape memory polymer composition. Compositions comprising the at least one epoxy resin **A1** in an amount falling within the above cited ranges have been found out to provide high shape recovery rates in combination with good mechanical properties after curing of the first curable adhesive.

Preferably, the first curable adhesive comprises at least one solid epoxy resin **A11** having an average of more than one epoxy group per molecule, preferably at least one of the formula (I). According to one or more embodiments, the first curable adhesive comprises at least one solid epoxy resin **A11** having an average of more than one epoxy group per molecule, preferably at least one solid epoxy resin of the formula (I), and at least one liquid epoxy resin **A12** having an average of more than one epoxy group per molecule, preferably at least one liquid epoxy resin of the formula (II). In these embodiments, it may also be preferred that the weight ratio of the amounts of the at least one solid epoxy resin **A11** and the at least one liquid epoxy resin **A12** contained in the first curable adhesive is in the range of from 5:1 to 0.5:1, more preferably from 2.5:1 to 1:1.

According to one or more further embodiments, the first curable adhesive comprises at least one solid epoxy resin **A11** of the formula (I) and at least one novolac type solid epoxy resin **A13** of the formula (III). In these embodiments, it may also be preferred that the weight ratio of the amounts of the at least one solid epoxy resin **A11** of the formula (I) and the at least one novolac type solid epoxy resin **A13** of formula (III) contained in the first curable adhesive is in the range of from 20:1 to 1:5, more preferably from 20:1 to 1:1, even more preferably from 15:1 to 3:1.

According to one or more further embodiments, the first curable adhesive comprises at least one solid epoxy resin **A11** of the formula (I), at least one liquid epoxy resin **A12** of the formula (II), and at least one novolac type solid epoxy resin **A13** of the formula (III).

The first curable adhesive further comprises, in addition to the at least one epoxy resin **A1** having an average of more than one epoxy group per molecule, at least latent hardener **B1** for epoxy resins. Such latent hardeners are essentially inert at room temperature and are activated by elevated temperature, typically at temperatures of 70°C or more, which initiates the curing reaction of the epoxy resins.

It is possible to use the standard latent hardeners for epoxy resins, which are known to a person skilled in the art. However, preference is given to nitrogen-containing latent hardeners for epoxy resins. Examples of suitable latent hardeners include dicyandiamide, guanamines, guanidines, aminoguanidines and derivatives thereof; substituted ureas, especially 3-(3-chloro-4-methylphenyl)-1,1-dimethylurea (chlortoluron), or phenyldimethylureas, especially p-chlorophenyl-N,N-dimethylurea (monuron), 3-phenyl-1,1-dimethylurea (fenuron) or 3,4-dichlorophenyl-N,N-dimethylurea (diuron), and N-methyl urea, N,N-dimethyl urea, N,N'-dimethyl urea, N,N,N'-trimethyl urea, N,N,N',N'-tetramethyl urea; imidazoles; and amine complexes. A particularly preferred latent hardener is dicyandiamide.

According to one or more embodiments, the at least one latent hardener **B1** for epoxy resins is present in the first curable adhesive in an amount of 0.5 - 12 wt.-%, more preferably 1 - 8 wt.-%, based on the total weight of the first curable adhesive.

It is clear to a person skilled in the art that the activation temperature of the at least one latent hardener **B1** for epoxy resins should be above the glass transition temperature ($T_g$) of the first curable adhesive in order to enable the mechanical deformation of the shape memory polymer composition and the temperature induced shape recovery to the original non-deformed shape. Preferably, the activation temperature of the at least one latent hardener **B1** for epoxy resins is at least 10°C, more preferable at least 20°C above the glass transition temperature ($T_g$) of the first curable adhesive. It is also preferred that the activation temperature of the at least one latent hardener **B1** for epoxy resins is above the melting temperature ($T_m$) of the at least one thermoplastic elastomer **TPE.** According to one or more embodiments, the activation temperature of the at least one latent hardener **B1** for epoxy resins is at least 10°C, more preferable at least 20°C above the melting temperature ($T_m$) of the at least one thermoplastic elastomer **TPE.**

The shape memory polymer composition comprises, in addition to the first curable adhesive, at least one thermoplastic elastomer **TPE.**

Thermoplastic elastomers include a class of copolymers and blends polymers having both thermoplastic and elastomeric properties. A blend-type thermoplastic elastomer can be provided as a reactor blend, in which case the blend components are produced in a sequential polymerization process, or as a physical blend, in which case the components are separately produced and melt-blended using high-shear mixing technique. Commercially available thermoplastic elastomers include, for example, thermoplastic polyolefins (TPO), styrenic block copolymers (TPS), thermoplastic vulcanizates, (TPV), thermoplastic polyurethanes (TPU), thermoplastic copolyesters (TPC), and thermoplastic polyamides (TPA).

The type of the at least thermoplastic elastomer **TPE** is not particularly restricted in the present invention. It has, however, been found that thermoplastic elastomers that are entirely miscible with the epoxide resins contained in the first curable adhesive have negative influence on the mechanical properties of the first cured adhesive. The at least one thermoplastic elastomer **TPE** is considered to be entirely miscible with the epoxide resins when a blend of these components has one single glass transition point, which can be measured, for example, by using dynamic mechanical thermal analysis (DMTA), for example, as the peak of the measured tan delta curve (ratio of storage and loss moduli).

According to one or more embodiments, the shape memory composition comprises the at least one thermoplastic elastomer **TPE** in an amount of 15 - 40 wt.-%, more preferably 20 - 40 wt.-%, even more preferably 25 - 35 wt.-%, most preferably 25 - 30 wt.-%, based on the total weight of the shape memory composition. Shape memory polymer compositions comprising the at least one thermoplastic elastomer **TPE** in an amount falling within the above cited ranges have been found out to exhibit high shape recovery rates. The term "shape recovery rate" refers in the present disclosure to the ability of the composition to return from a deformed temporary shape back to the original (permanent) non-deformed shape. The shape recovery rate is determined as a ratio of the recovered shape change and deformed shape change:

$$Shape\ recovery\ rate = \frac{(D_R - D_T)}{(D_O - D_T)} \cdot 100\ \%$$

wherein,

$D_R$ is dimension of the composition in the recovered shape,
$D_T$ is the dimension of the composition in the temporary shape, and
$D_O$ is dimension of the composition in the original shape before deformation.

In case of the 100 % shape recovery rate, the recovered dimension $D_R$ corresponds to the original dimension Do.

According to one or more embodiments, the at least one thermoplastic elastomer is selected from the group consisting of ethylene - α-olefin copolymers, propylene - α-olefin copolymers, and ethylene vinyl acetate copolymers.

Suitable ethylene - α-olefin copolymers include random and block copolymers of ethylene and one or more $C_3$-$C_{20}$ α-olefin monomers, in particular one or more of propylene, 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of ethylene-derived units, based on the total weight of the copolymer.

Suitable propylene-α-olefin copolymers include propylene-ethylene random copolymers and propylene-α-olefin random and block copolymers of propylene and one or more $C_4$-$C_{20}$ α-olefin monomers, in particular one or more of 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of propylene-derived units, based on the total weight of the copolymer.

Suitable copolymers of ethylene and vinyl acetate include those having a content of a structural unit derived from vinyl acetate in the range of 4 - 90 wt.-%, in particular 4 - 80 wt.-%, based on the total weight of the copolymer. Suitable copolymers of ethylene and vinyl acetate are commercially available, for example, under the trade name of Escorene® (from Exxon Mobil), under the trade name of Primeva® (from Repsol Quimica S.A.), and under the trade name of Evatane® (from Arkema Functional Polyolefins).

Suitable ethylene-α-olefin copolymers include, for example, ethylene-based polyolefin elastomers (POE), which are commercially available, for example, under the trade name of Engage®, such as Engage® 7256, Engage® 7467, Engage® 7447, Engage® 8003, Engage® 8100, Engage® 8480, Engage® 8540, Engage® 8440, Engage® 8450, Engage® 8452, Engage® 8200, and Engage® 8414 (all from Dow Chemical Company).

Other suitable ethylene-α-olefin copolymers include, for example, ethylene-based plastomers, which are commercially available, for example, under the trade name of Affinity®, such as Affinity® EG 8100G, Affinity® EG 8200G, Affinity® SL 8110G, Affinity® KC 8852G, Affinity® VP 8770G, and Affinity® PF 1140G (all from Dow Chemical Company) and under the trade name of Exact®, such as Exact® 3024, Exact® 3027, Exact® 3128, Exact® 3131, Exact® 4049, Exact® 4053, Exact® 5371, and Exact® 8203 (all from Exxon Mobil).

Further suitable ethylene-α-olefin copolymers include ethylene-α-olefin block copolymers, such as ethylene-based olefin block copolymers (OBC), which are commercially available, for example, under the trade name of Infuse®, such as Infuse® 9100, Infuse® 9107, Infuse® 9500, Infuse® 9507, and Infuse® 9530 (all from Dow Chemical Company).

Suitable propylene-α-olefin copolymers include, for example, propylene based elastomers (PBE) and propylene-based plastomers (PBP), which are commercially available, for example, under the trade name of Versify® (from Dow Chemical Company) and under the trade name of Vistamaxx® (from Exxon Mobil).

According to one or more embodiments, the at least one thermoplastic elastomer **TPE** has a melt flow index (MFI) determined according to ISO 1133 (190°C/2.16 kg) of at least 1.0 g/10 min, preferably at least 2.0 g/10 min. In particular, it may be preferable that the at least one thermoplastic elastomer has a melt flow index determined according to ISO 1133 (190°C/2.16 kg) in the range from 1.0 g/10 min to 15.0 g/10 min, more preferably from 1.5 g/10 min to 10.0 g/10 min, most preferably from 2.0 g/10 min to 5.0 g/10 min.

According to one or more embodiments, the at least one thermoplastic elastomer **TPE** is an ethylene - octene copolymer, preferably an ethylene - octene random copolymer. Suitable ethylene - octene copolymers are commercially available, for example, from Dow Chemical Company under the trade name of Engage®, such as Engage® 8003, Engage® 8100, Engage® 8480, Engage® 8540, Engage® 8440, Engage® 8450, Engage® 8452, Engage® 8200, and Engage® 8414.

According to one or more embodiments, the at least one thermoplastic elastomer **TPE** is an ethylene - octene copolymer, preferably an ethylene - octene random copolymer having a melt flow index (MFI) determined according to ISO 1133 (190 °C/2.16 kg) of at least 1.0 g/10 min, more preferably in the range from 1.0 g/10 min to 15.0 g/10 min, even more preferably from 1.5 g/10 min to 10.0 g/10 min, most preferably from 2.0 g/10 min to 5.0 g/10 min.

According to one or more embodiments, the first curable adhesive further comprises:
a3) At least one epoxy resin modified acrylonitrile-butadiene copolymer **C.**

Such epoxy resin modified acrylonitrile-butadiene copolymers are known to a person skilled in the art. For example, they can be produced by reacting carboxy- or epoxy-terminated acrylonitrile-butadiene copolymers, also known as liquid rubbers, with polyepoxides and/or polyphenols. Preferably, the at least one epoxy resin modified acrylonitrile-butadiene copolymer **C** is obtained by reacting one or more carboxyl-terminated butadiene-acrylonitrile copolymers (CTBN) with one or more solid epoxy resins of the formula (I) and/or one or more liquid epoxy resins of the formula (II)

and/or one or more novolac type solid epoxy resins of the formula (III).

Suitable epoxy resin modified acrylonitrile-butadiene copolymers are commercially available, for example, under the trade name of Struktol® from Schill + Seilacher Gruppe Germany, such as Struktol® 3604, Struktol® 3606, Struktol® 3611, Struktol® 3614, Struktol® 3654, and Struktol® 3656. Suitable for use as the at least one epoxy resin modified acrylonitrile-butadiene copolymer **C** also include the mixtures of polymers disclosed in US patent 9,796,809 B2 as "impact strength improving agents for epoxy resin compositions".

According to one or more embodiments, the at least one epoxy resin modified acrylonitrile-butadiene copolymer **C** comprises 1 - 30 wt.-%, preferably 2.5 - 25 wt.-%, more preferably 5-20 wt.-%, even more preferably 5 - 15 wt.-% of the total weight of the shape memory polymer composition. Shape memory polymer compositions comprising the at least one epoxy resin modified acrylonitrile-butadiene copolymer **C** in an amount falling within the above cited ranges have been found out to provide high shape recovery rates combined with good mechanical properties of the cured composition.

According to one or more embodiments, the at least one epoxy resin modified acrylonitrile-butadiene copolymer **C** comprises 5-50 wt.-%, preferably 10 - 45 wt.-%, more preferably 20 - 40 wt.-%, even more preferably 15 - 30 wt.-%, of at least one acrylonitrile-butadiene rubber, based on the weight of the at least one epoxy resin modified acrylonitrile-butadiene copolymer **C.**

The amount of acrylonitrile contained in the at least one acrylonitrile-butadiene rubber is not particularly restricted. It may be preferable that said at least one acrylonitrile-butadiene rubber comprises not more than 40 wt.-%, more preferably not more than 35 wt.-%, even more preferably not more than 30 wt.-%, of acrylonitrile, based on the total weight of the at least one acrylonitrile-butadiene rubber. Preferably, said at least one acrylonitrile-butadiene rubber is a carboxyl-terminated acrylonitrile-butadiene rubber.

According to one or more embodiments, the at least one acrylonitrile-butadiene rubber comprises 0.5 - 15.0 wt.-%, preferably 1.0 - 10.0 wt.-%, more preferably 1.5 - 7.5 wt.-%, even more preferably 1.5 - 5.0 wt.-% of the total weight of the shape memory polymer composition.

The first curable adhesive can further comprise additional constituents (auxiliaries) which are customary for curable structural adhesives. Examples of suitable auxiliaries include fillers, UV absorbers, UV and heat stabilizers, antioxidants, flame retardants, pigments, and dyes, thixotropic set-up agents, such as aerosols, nanoclays, and reactive diluents.

According to one or more embodiments, the shape memory polymer composition further comprises

c) At least one solid particulate filler **F1.**

According to one or more embodiments, at least one solid particular filler **F1** is selected from the group consisting of mica, talc, kaolin, wollastonite, feldspar, chlorite, bentonite, montmorillonite, calcium carbonate (precipitated or ground), dolomite, quartz, silica (pyrogenic or precipitated), cristobalite, calcium oxide, aluminum hydroxide, magnesium oxide, hollow ceramic spheres, hollow glass spheres, hollow organic spheres, glass spheres, and functionalized alumoxanes. Preferred solid particulate fillers include both organically coated and also uncoated commercially available forms of the fillers included in the above presented list.

According to one or more embodiments, the shape memory polymer composition comprises the at least one solid particulate filler **F1** in an amount of 1 - 35 wt.-%, preferably 2.5 - 30 wt.-%, more preferably 5 - 30 wt.-%, even more preferably 5 - 25 wt.-%, based on the total weight of the shape memory polymer composition.

According to one or more embodiments, the shape memory polymer composition comprises at least one first solid particulate filler **F11** selected from the group consisting of inorganic fibers, such as glass fibers, aramid fibers, wollastonite fibers, carbon fibers, and Kevlar fibers, and organic fibers. Inorganic fibers, which have been surface treated, for example, with silanes, may also be used. Shape memory polymer compositions including the at least one first solid particulate filler **F11** have been found to provide excellent mechanical properties, in particular high lap shear strength after curing of the first curable adhesive. The at least one first solid particulate filler **F11** may be a mixture of fibers having different shapes and sizes. Preferably, the at least one first solid particulate filler **F11** is composed of inorganic fibers, preferably selected from the group consisting of glass fibers, aramid fibers, wollastonite fibers, and carbon fibers.

According to one or more embodiments, the shape memory polymer composition comprises the at least one first solid particulate filler **F11** in an amount of 0.5 - 20 wt.-%, preferably 1 - 15 wt.-%, more preferably 2.5 - 12.5 wt.-%, even more preferably 2.5 - 10 wt.-%, based on the total weight of the shape memory polymer composition. The at least on first solid particulate filler **F11** may have a number average length of 1.0 - 10.0 mm, preferably 1.5 - 7.5 mm, most preferably 2.5 - 5.0 mm and/or a number average diameter of 5 - 50 $\mu$m, preferably 7.5 - 30 $\mu$m, most preferably 10 - 25 $\mu$m.

According to one or more embodiments, the at least one first solid particulate filler **FF1** is composed of inorganic fibers, preferably of glass fibers, wherein the at least one first solid particulate filler **F11** comprises 0.5 - 20 wt.-%, preferably 1 - 15 wt.-%, more preferably 2.5 - 12.5 wt.-%, even more preferably 2.5 - 10 wt.-% of the total weight of the shape memory polymer composition.

According to one or more embodiments, the shape memory polymer composition comprises at least one second solid particulate filler **F12** selected from the group consisting of mica, talc, kaolin, wollastonite, feldspar, chlorite, bentonite,

montmorillonite, calcium carbonate (precipitated or ground), dolomite, quartz, silica (pyrogenic or precipitated), cristobalite, calcium oxide, aluminum hydroxide, and magnesium oxide.

According to one or more embodiments, the shape memory polymer composition comprises the at least one second solid particulate filler **F12** in an amount of 0.5 - 20 wt.-%, preferably 1 - 15 wt.-%, more preferably 2.5 - 12.5 wt.-%, even more preferably 2.5 - 10 wt.-%, based on the total weight of the shape memory polymer composition.

The at least one second solid particulate filler **F12** is preferably present in the shape memory polymer composition in the form of finely divided particles. The term "finely divided particles" refers to particles, whose median particle size $d_{50}$ is not more than 500 $\mu$m, preferably not more than 250 $\mu$m. The term median particle size $d_{50}$ refers to a particle size below which 50% of all particles by mass are smaller than the $d_{50}$ value. The term "particle size" refers in the present document to the area-equivalent spherical diameter of a particle. The particle size distribution can be determined by sieve analysis according to the method as described in ASTM C136/C136M -14 standard ("Standard Test Method for Sieve Analysis of Fine and Coarse Aggregates).

According to one or more embodiments, the shape memory polymer composition comprises at least one third solid particulate filler **F13** selected from the group consisting of hollow ceramic spheres, hollow glass spheres, hollow organic spheres, glass spheres, and functionalized alumoxanes.

According to one or more embodiments, the shape memory polymer composition comprises the at least one third solid particulate filler **F13** in an amount of 0.5 - 20 wt.-%, preferably 1 - 15 wt.-%, more preferably 2.5 - 12.5 wt.-%, even more preferably 2.5 - 10 wt.-%, based on the total weight of the shape memory polymer composition.

The shape memory polymer composition may further comprise one or more chemical or physical blowing agents. These may be used to provide an expandable layer, which is able to both expand and foam. It is, however, preferred that the shape memory polymer composition is substantially free of chemical or physical blowing agents. The expression "substantially free" is understood to mean in the context of the present disclosure that the shape memory polymer composition may contain only traces of chemical or physical blowing agents, such as less than 0.25 wt.-%, preferably less than 0.1 wt.-%, more preferably less than 0.05 wt.-%, even more preferably less than 0.01 wt.-%, based on the total weight of the shape memory polymer composition.

When preparing the shape memory polymer composition used for providing the expandable layer, the first curable adhesive is preferably mixed with the at least one thermoplastic elastomer **TPE** at a temperature, which is above the glass transition temperature ($T_g$) of the first curable adhesive, until a homogenous mixture is obtained. Preferably, the mixing of the first curable adhesive with the at least one thermoplastic elastomer **TPE** is conducted at a temperature, which is above the melting temperature ($T_m$) of the at least one thermoplastic elastomer **TPE.** In case the composition comprises multiple thermoplastic elastomers **TPE,** the mixing is preferably conducted at a temperature above the melting temperature of the thermoplastic elastomer having the highest melting temperature. The mixing of the ingredients can be conducted using any conventional mixing apparatus, such as a kneader or continuous-type mixing apparatus, such as a single- or twin-screw extruder.

It may furthermore be advantageous that the at least one latent hardener **B1** for epoxy resins is added to the composition after mixing of all other ingredients. In this case, the first mixing step can be conducted at or even above the activation temperature of the at least one latent hardener **B1** for epoxy resins. This may be advantageous since a more efficient mixing is typically obtained at higher temperatures.

The shape memory polymer composition in its temporary deformed shape is preferably a storage stable composition. The term "storage stable" refers in the present disclosure to materials, which can be stored at specified storage conditions for long periods of time, such as at least one month, in particular at least 3 months, without any significant changes in the application properties and reactivity of the material. The "typical storage conditions" refer here to temperatures of not more than 60°C, in particular not more than 50°C.

According to one or more embodiments, the expandable layer of the adhesive article of the present invention is obtained by a process comprising steps of:

i) Providing the shape memory polymer composition in an original non-deformed shape, in which the at least one thermoplastic elastomer **TPE** is in a relaxed state,

ii) Heating the shape memory polymer composition in its original non-deformed shape to a temperature, which is above the glass transition temperature ($T_g$) of the first curable adhesive and below the melting temperature ($T_m$) of the at least one thermoplastic elastomer **TPE,**

iii) Mechanically deforming the heated shape memory polymer composition from its original non-deformed shape to the temporary deformed shape, in which the at least one thermoplastic elastomer **TPE** is in a compressed state, and

iv) Cooling the deformed shape memory polymer composition while keeping the deformation in place to a temperature below the glass transition temperature ($T_g$) of the first curable adhesive.

The deformation from the original non-deformed shape to the temporary deformed shape in step iii) has to be completed under tension of the at least one thermoplastic elastomer **TPE,** i.e. against resistance of the at least one thermoplastic elastomer **TPE.** Consequently, during step iii) the temperature of the shape memory polymer composition has to be kept below the melting temperature ($T_m$) of the at least one thermoplastic elastomer **TPE.** On the other hand, the deformation is preferably conducted at a temperature above the transition temperature ($T_{trans}$) of the shape memory polymer composition, i.e. above the glass transition temperature ($T_g$) of the first curable adhesive. In order to fix the temporary deformed shape, the temperature of the shape memory polymer composition is lowered to below the glass transition temperature ($T_g$) of the first curable adhesive while keeping the deformation in place, i.e. while holding the shape memory polymer composition in its temporary deformed shape.

The shape memory polymer composition can be returned from the temporary deformed shape back to the original non-deformed shape by heating the composition to a temperature above the glass transition temperature ($T_g$) of the first curable adhesive. This enables the at least one thermoplastic elastomer **TPE** to return from the compressed state to a relaxed state, which brings the composition from the temporary deformed shape to the original non-deformed shape. Preferably, the shape memory polymer composition has a shape recovery rate of at least 50%, more preferably at least 75%, even more preferably at least 85%, most preferably at least 95%, wherein the shape recovery rate is defined as ratio of the recovered shape change and deformed shape change as described above.

According to one or more embodiments, the first adhesive layer is composed of a second curable adhesive comprising:

a') At least one epoxy resin **A2** having an average of more than one epoxy group per molecule,
b') At least one latent hardener **B2** for epoxy resins, and
c') Optionally at least one polymeric impact modifier **D.**

The second curable adhesive and the first adhesive layer are preferably tacky at room temperature. The term "tacky" refers in the present disclosure to a surface tack in the sense of instantaneous adhesion or stickiness that is preferably sufficient so that, when pressed with a thumb, exerting a pressure of 5 kg for 1 second on the surface of the composition, the thumb remains sticking to the surface of the composition, preferably such that a composition having an intrinsic weight of 50 g can be lifted up for at least 5 seconds.

According to one or more embodiments, the second curable adhesive has a viscosity of 50 - 6000 Pa·s, more preferably 500 - 5000 Pa·s, even more preferably 1000 - 4500 Pa·s, most preferably 2000 - 4000 Pa·s measured at a temperature of 80 °C, wherein the viscosity is determined oscillographically by means of a rheometer having a heatable plate (MCR 201, Anton Paar) (1000 μm gap, measuring plate diameter: 25 mm (plate/plate), deformation 0.01 at 5 Hz, temperature 80 °C.

Preferably, the first adhesive layer is in a form of a continuous layer composed the second curable adhesive. The term "continuous layer" refers in the present document to layers consisting of one single area coated with the respective composition. In contrast, a "discontinuous layer" is considered to consist of more than one areas coated with the respective composition, which areas are not connected with each other to form a single continuous layer.

The first adhesive layer is applied on the expandable layer to cover at least a portion of the first major surface of the expandable layer. According to one or more embodiments, the first adhesive layer covers at least 50 %, preferably at least 65 %, most preferably at least 75 % of the first major surface of the expandable layer. According to one or more further embodiments, the first adhesive layer covers substantially entire area of the first major surface of the expandable layer. The term "substantially entire area" is understood to mean at least 85 %, preferably at least 90 %, more preferably at least 95 %, most preferably at least 97.5 % of the entire area.

The preferred thickness of the first adhesive layer depends on the embodiment of the adhesive article, in particular on the composition of the second curable adhesive, and on the intended application of the adhesive article. Preferably, the first adhesive layer has a thickness of not more than 5.0 mm, more preferably not more than 3.5 mm. According to one or more embodiments, the first adhesive layer has a thickness of 0.05 -3.5 mm, preferably 0.1 - 2.5 mm, more preferably 0.15 - 2.0 mm, even more preferably 0.2 - 1.5 mm.

According to one or more embodiments, the at least one epoxy resin **A2** having an average of more than one epoxy group per molecule comprises 25 - 75 wt.-%, preferably 30 - 70 wt.-%, more preferably 35 - 65 wt.-%, even more preferably 40 - 60 wt.-% of the total weight of the second curable adhesive.

Preferably, the second curable adhesive comprises at least one liquid epoxy resin **A21** having an average of more than one epoxy group per molecule, preferably at least one liquid epoxy resin of the formula (II).

According to one or more embodiments, the second curable adhesive comprises at least one liquid epoxy resin **A21** having an average of more than one epoxy group per molecule, preferably at least one liquid epoxy resin of the formula (II), and at least one solid epoxy resin **A22** having an average of more than one epoxy group per molecule, preferably at least one solid epoxy resin of the formula (I). In these embodiments, it may also be preferred that the weight ratio of the amounts of the at least one liquid epoxy resin **A21** having an average of more than one epoxy group per

molecule and the at least one solid epoxy resin **A22** having an average of more than one epoxy group per molecule contained in the second curable adhesive is in the range of from 5:1 to 0.5:1, more preferably from 2.5:1 to 1:1.

The preferences given above for the at least one latent hardener **B1** for epoxy resins apply equally to the at least one latent hardener **B2** for epoxy resins. According to one or more embodiments, the at least one latent hardener **B2** for epoxy resins comprises 0.5 - 12 wt.-%, preferably 1 - 8 wt.-% of the total weight of the second curable adhesive.

According to one or more embodiments, the second curable adhesive comprises at least one polymeric impact modifier **D.**

The term "polymeric impact modifier" refers in the present disclosure to an organic polymer component, which even at low levels of addition, typically in the range of 0.1 - 20 wt.-%, is able to significantly increase the strength of a cured epoxy resin composition against impact forces. Cured epoxy resin compositions containing such polymeric impact modifiers are therefore capable of accommodating greater impact stress or jolting stress before the matrix tears or ruptures.

According to one or more embodiments, the at least one polymeric impact modifier **D** comprises 1 - 40 wt.-%, preferably 5 - 30 wt.-%, more preferably 10 - 25 wt.-% of the total weight of the second curable adhesive.

According to one or more embodiments, the at least one impact modifier **D** is selected from the group consisting of terminally blocked polyurethane pre-polymers, liquid rubbers, epoxy resin modified acrylonitrile-butadiene copolymers, and core-shell polymers. Other impact modifiers known in the epoxy adhesive art may be used in addition to, or as a substitute for the above mentioned impact modifiers.

According to a first preferred embodiment, the at least one polymeric impact modifier **D** comprises or consists of at least one terminally blocked polyurethane pre-polymer. The terminally blocked polyurethane prepolymer is especially a polyurethane prepolymer having terminal isocyanate groups, the terminal isocyanate groups being blocked by a blocking group. These can be obtained by reacting a polyurethane prepolymer having terminal isocyanate groups with a standard blocking agent.

Suitable terminally blocked polyurethane pre-polymers include to be used as the at least one polymeric impact modifier **D** include, in particular, the "terminally blocked polyurethane prepolymers of formula (I)" as disclosed in a published patent application WO2017121826 A1.

According to a second preferred embodiment, the at least one polymeric impact modifier **D** comprises or essentially consists of at least one liquid rubber, preferably selected from the group consisting of carboxyl-terminated acrylonitrile - butadiene copolymers, epoxy-terminated acrylonitrile - butadiene copolymers, and epoxy-resin modified acrylonitrile-butadiene copolymers.

Suitable carboxyl- and epoxy-terminated acrylonitrile - butadiene copolymers to be used as the at least one polymeric impact modifier **D** are commercially available, for example, under the tradename of Hypro® (previously Hycar®), such as Hypro® CTBN, Hypro® CTBNX, and Hypro® ETBN (from Emerald Performance Materials LLC). Suitable epoxy-resin modified acrylonitrile-butadiene copolymers are commercially available, for example, under the tradename of Struktol® and Polydis® (from Schill + Seilacher "Struktol" GmbH), Albipox® (from Evonik Degussa), and HyPox® (from Emerald Performance Materials LLC).

According to one or more preferred embodiments, the at least one polymeric impact modifier **D** is an epoxy resin modified acrylonitrile - butadiene copolymer, preferably comprising 5 - 50 wt.-%, more preferably 10 - 45 wt.-%, even more preferably 20 - 40 wt.-%, still more preferably 15 - 30 wt.-% of at least one acrylonitrile - butadiene rubber, based on the weight of the at least one epoxy resin modified acrylonitrile - butadiene copolymer.

It may be preferable that the at least one acrylonitrile - butadiene rubber comprises not more than 40 wt.-%, more preferably not more than 35 wt.-%, most preferably not more than 30 wt.-%, of acrylonitrile, based on the total weight of the at least one acrylonitrile-butadiene rubber. Preferably, the at least one acrylonitrile-butadiene rubber is a carboxyl-terminated acrylonitrile-butadiene rubber.

It may be preferable that the second curable adhesive comprises the at least one acrylonitrile - butadiene rubber in an amount of 0.5 - 25 wt.-%, more preferably 1.5 - 20 wt.-%, even more preferably 2.5 - 15 wt.-%, still more preferably 5.0 - 15 wt.-%, based on the total weight of the second curable adhesive.

According to a third preferred embodiment, the at least one polymeric impact modifier **D** comprises or essentially consists of at least one core-shell polymer. Core-shell polymers consist of an elastic core polymer and a rigid shell polymer. Particularly suitable core-shell polymers consist of a core of elastic acrylate or butadiene polymer surrounded by a rigid shell of a rigid thermoplastic polymer. This core-shell structure forms either spontaneously through separation of a block copolymer or is defined by the polymerization regime as a latex or suspension polymerization with subsequent grafting.

Preferred core-shell polymers include in particular those known as MBS polymers, which are commercially available, for example, under the trade name of Clearstrength® (from Arkema), Paraloid® (from Dow Chemicals) or F-351® (from Zeon).

Particular preference is given to core-shell polymer particles that are provided in the form of dried polymer latex. Examples of these include, for example, Genioperl® M23A (from Wacker) having a polysiloxane core and acrylate

shell, radiation-crosslinked rubber particles of the NEP® series (from Omnova), Nanoprene® (from Lanxess), and Paraloid® EXL (from Dow Chemicals. Further comparable examples of suitable core-shell polymers are available under the trade name of Albidur® (from Evonik, Germany).

According to one or more embodiments, the second curable adhesive further comprises:
d') At least one solid particulate filler **F2.**

According to one or more embodiments, the at least one solid particulate filler **F2** is selected from the group consisting of mica, talc, kaolin, wollastonite, feldspar, chlorite, bentonite, montmorillonite, calcium carbonate (precipitated or ground), dolomite, quartz, silica (pyrogenic or precipitated), cristobalite, calcium oxide, aluminum hydroxide, and magnesium oxide.

According to one or more embodiments, the at least one solid particulate filler **F2** comprises 2.5 - 50 wt.-%, preferably 5 - 45 wt.-%, more preferably 15 - 45 wt.-%, even more preferably 20 - 45 wt.-%, still more preferably 20 - 40 wt.-% of the total weight of the second curable adhesive.

According to one or more embodiments, the adhesive article further comprises a second adhesive layer covering at least a portion of the second major surface of the expandable layer. The composition of the second adhesive layer is not particularly restricted. According to one or more embodiments, the second adhesive layer is composed of the second curable adhesive as described above.

The adhesive article comprising the expandable layer is dimensionally stable at temperatures below the glass transition temperature ($T_g$) of the first curable adhesive and it can be subjected to further processing, for example, punching or cutting. At temperatures above the $T_g$ of the first curable adhesive, the dimensional stability is lost since the at least one thermoplastic elastomer is able to return from its compressed state to a relaxed state, which results in expansion of the expandable layer.

Another subject of the present invention is a method for producing an adhesive article of the present invention, the method comprising steps of:

i') Providing the shape memory polymer composition in an original non-deformed shape, wherein the at least one thermoplastic elastomer is in a relaxed state,

ii') Heating the shape memory polymer composition in its original non-deformed shape to a temperature, which is above the glass transition temperature ($T_g$) of the curable adhesive and below the melting temperature ($T_m$) of the at least one thermoplastic elastomer,

iii') Mechanically deforming the heated shape memory polymer composition from its original non-deformed shape to the temporary deformed shape, wherein the at least one elastomer is in a compressed state,

iv') Cooling the deformed shape memory polymer composition while keeping the deformation in place to a temperature below the glass transition temperature ($T_g$) of the curable adhesive to obtain an expandable layer composed of the shape memory polymer composition, and

v') Applying the first adhesive layer to at least a portion of the first major surface of the expandable layer.

The original non-deformed shape of the shape memory polymer composition is preferably a shape of a sheet-like element, more preferably a shape of a strip or a sheet or a patch. The shape memory polymer composition in the original non-deformed shape can be provided by using any suitable technique known to a person skilled in the art, such as by extrusion, casting, and/or molding, techniques.

In order to obtain an expandable layer the deformation of the heated shape memory polymer composition from the original non-deformed shape to the temporary deformed shape in step iii') has to be completed under tension of the at least one thermoplastic elastomer **TPE,** i.e. against resistance of the at least one thermoplastic elastomer **TPE.** Consequently, the temperature of the shape memory polymer composition in step iii') is selected such that the composition is deformable ($T > T_g$ of the first curable adhesive) and that the at least one thermoplastic elastomer **TPE** maintains its elastic properties ($T < T_m$ of the thermoplastic elastomer). In case the shape memory polymer composition comprises more than one thermoplastic elastomer **TPE,** the mechanical deforming step should be conducted at a temperature below the melting temperature of the thermoplastic elastomer having the lowest melting temperature ($T_m$). In order to fix the temporary deformed shape in step iv'), the temperature of the shape memory polymer composition is lowered to below the glass transition temperature ($T_g$) of the first curable adhesive while keeping the deformation in place, i.e. while holding the shape memory polymer composition in its temporary deformed shape.

The temperature to which the shape memory polymer composition is heated in step ii') should also be selected such that it is below the activation temperature of the at least one latent hardener **B1** for epoxy resins. Preferably, the temperature of the shape memory polymer composition should be kept at least 10°C, preferably at least 20°C below

the activation temperature of the at least one latent hardener **B1** for epoxy resins during all steps i') to v').

The step iii') of the method is preferably conducted by compressing the heated shape memory polymer composition obtained from step ii'). The composition can be compressed, for example, by applying an external force acting along at least one axis of the shape memory polymer composition in its original shape. The compressing can be conducted by using any conventional means known by a person skilled in the art such as by pressing or rolling.

Due to the properties of the shape memory polymer composition, the mechanical deforming conducted in step iii') typically results in shrinking of the composition in at least one dimension and expansion of the composition in at least one other dimension. For example, in case the external force is applied along the vertical axis of the shape memory polymer composition in its original non-deformed shape, the temporary deformed shape typically has reduced height and increased width/length/diameter. The preferred degree of the conducted deformation is not particularly restricted in the present invention. According to one or more embodiments, at least one dimension of the shape memory polymer composition in its temporary deformed shape is at least 25% lower, preferably at least 35% lower, than the corresponding dimension in the original non-deformed shape. Preferably, the dimension of the shape memory polymer composition in the temporary deformed shape corresponding to the main direction of the external force applied on the composition in step iii) is at least 25% lower, preferably at least 35% lower, than the corresponding dimension in the original non-deformed shape.

According to one or more embodiments, step v') of the method for producing an adhesive article comprises steps of:

i") Providing the second curable adhesive as defined above,

ii") Heating the second curable adhesive to an application temperature of above 25 °C, and

iii") Applying the heated second curable adhesive composition to at least a portion of the first major surface of the expandable layer.

It goes without saying that the second curable adhesive is applied at a temperature, which is below the activation temperature of the at least one latent hardener **B2** for epoxy resins. According to one or more embodiments, the second curable adhesive is heated in step ii") to a temperature in the range of 10 - 100 °C, preferably 15 - 60 °C, more preferably 30 - 60 °C.

The second curable adhesive can be applied by using any conventional technique, for example, by slot die coating, roller coating, extrusion coating, calender coating, or spray coating. The second curable adhesive can be applied to at least a portion of at least one of the major surfaces of the expandable layer with a coating weight of, for example, 50 - 500 g/$m^2$, such as 55 - 350 g/$m^2$, in particular 65 - 150 g/$m^2$.

Another subject of the present invention is a method for bonding two substrates to each other, the method comprising steps of:

I) Providing an adhesive article (1) according of the present invention between a first and a second substrate (4, 5) spaced apart such that the first adhesive layer (3) is contacted with the first substrate (4),

II) Heating the adhesive article (1) to a temperature above the glass transition temperature ($T_g$) of the first curable adhesive causing the expandable layer (2) to increase its thickness, and

III) Curing the first and second curable adhesives.

The first and second substrates preferably have a three-dimensional extent, more preferably having a sheet-like form. They can form a part of bodies and/or frames of vehicles and means of transportation, in particular of water, land or air vehicles, such as automotive vehicles, trucks, railroad wagons, boats, ships, helicopters and airplanes. The first and second substrates can be composed of any materials. In particular, the substrates may consist of a plastic, a metal, or of a combination of a plastic and a metal. Suitable plastics for the substrates include, for example, polyurethanes, polyamides, polyesters and polyolefins and polyolefin copolymers, in particular, high temperature-resistant polymers such as poly(phenylene ethers), polysulfones, and polyethersulfones, and fiber-reinforced plastic, in particular of a plastic reinforced with inorganic fibers, such as glass fibers, aramid fibers, carbon fibers, or basalt fibers. Suitable metals for the substrates include, for example, aluminum, steel, nickel, and alloys thereof. Furthermore, the metal can be present in the substrate in an untreated form or it can be pre-treated with suitable agents, for example, to prevent corrosion or to improve the adhesion.

In the step I) of the method, the adhesive article of the present invention is provided between the first and second substrates. The temperature of the adhesive article during step I) is below the glass transition temperature $T_g$

of the first curable adhesive in order to keep the shape memory polymer composition in the temporary deformed shape. Preferably, the adhesive article is provided between the first and second substrates such that a gap remains between the top surface of the adhesive article, i.e. the outer surface of the adhesive article opposite to the side of the first substrate, and second substrate.

In step II) of the method, the temperature of the adhesive article is heated above the $T_g$ of the first curable adhesive, which causes the expandable layer to expand as the shape memory polymer composition returns from the temporary deformed shape to the original non-deformed shape. Typically, heating the adhesive article above the $T_g$ of the first curable adhesive causes the expandable layer to shrink in one direction and to increase in thickness in a transverse direction, i.e. to expand in the direction of the thickness. Preferably, the expansion of the expandable layer causes the gap originally present between the top surface of the adhesive article and the second substrate to be completely closed. The heating of the adhesive article can be conducted using any conventional means, such as heating in an oven, heating by air stream, or heating with infrared (IR)-radiation.

In step III) of the method, the first and second curable adhesives are cured in order to increase the mechanical strength of the expanded layer and the first adhesive layer. Preferably, the first and second curable adhesives are cured by heating. The heating of the first and second curable adhesives can be conducted using any conventional means, such as heating in an oven, heating by air stream, or heating with infrared (IR)-radiation, for example to a temperature of at or above 120 °C, preferably at or above 140 °C, such as in the range of 120 - 220 °C, in particular 135 - 200 °C.

According to one or more embodiments, the adhesive article (1) comprises a second adhesive layer (3') covering at least a portion of the second major surface of the expandable layer (2) or the method for bonding two substrates to each other comprises a further step of applying an adhesive composition to at least a portion of the second major surface of the expandable layer (2) before the adhesive article (1) is heated to a temperature above the glass transition temperature ($T_g$) of the first curable adhesive in step II).

Step I) of the method can comprise providing a pre-formed adhesive article according to the present invention and positioning it between the first and the second substrates or the adhesive article of the present invention can be formed in situ, wherein step I) comprises preparing the adhesive article on the surface of the first substrate followed by positioning the second substrate over the adhesive article.

According to one or more embodiments, step I) comprises steps of:

I') Providing the shape memory polymer composition in an original non-deformed shape, wherein the at least one thermoplastic elastomer is in a relaxed state,

II') Applying the first adhesive layer to at least a portion of the first major surface of the shape memory polymer composition,

III') Contacting the first adhesive layer with a surface of a first substrate,

IV') Heating the shape memory polymer composition in its original non-deformed shape to a temperature, which is above the glass transition temperature ($T_g$) of the curable adhesive and below the melting temperature ($T_m$) of the at least one thermoplastic elastomer,

V') Mechanically deforming the heated shape memory polymer composition from its original non-deformed shape to the temporary deformed shape, wherein the at least one elastomer is in a compressed state,

VI') Cooling the deformed shape memory polymer composition while keeping the deformation in place to a temperature below the glass transition temperature ($T_g$) of the curable adhesive to obtain an expandable layer composed of the shape memory polymer composition,

VII') Positioning a second substrate on top of the adhesive article such that the adhesive article is sandwiched between the first substrate and the second substrate and such that there remains a gap between the top surface of the adhesive article and the second substrate.

Still another subject of the present invention is a two-part bonded assembly (6) comprising a first substrate (4) and a second substrate (5) and the adhesive article (1) of the present invention provided between the first and second substrates (4, 5), wherein the first substrate (4) and the second substrate (5) are bonded to each other over at least part of their opposing surfaces via the adhesive article (1).

Still another subject of the present invention is a use of the adhesive article of the present invention for reinforcing or baffling cavities of structural components.

The use of the adhesive article for reinforcing or baffling cavities of structural components typically comprises

steps of placing an adhesive article of the present invention into a cavity of a structural component, heating the adhesive article to a temperature, which is above the glass transition temperature ($T_g$) of the first curable adhesive, and curing of the first and second curable adhesives.

Preferably, the first and second curable adhesives are cured by heating. The heating of the first and second curable adhesives can be conducted using any conventional means, such as heating in an oven, heating by air stream, or heating with infrared (IR)-radiation, for example to a temperature of at or above 120 °C, preferably at or above 140 °C, such as in the range of 120 - 220 °C, in particular 135 - 200 °C.

## Claims

**1.** An adhesive article (1) comprising an expandable layer (2) having a first and a second major surface and a first adhesive layer (3) covering at least a portion of the first major surface of the expandable layer (2), wherein the expandable layer is composed of a shape memory polymer composition comprising:

a) A first curable adhesive comprising:

a1) At least one epoxy resin **A1** having an average of more than one epoxy group per molecule and
a2) At least one latent hardener **B1** for epoxy resins, and

b) At least one thermoplastic elastomer **TPE,** and

wherein the shape memory polymer composition is in a temporary deformed shape.

**2.** The adhesive article (1) according to claim 1, wherein the at least one thermoplastic elastomer **TPE** is present in the shape memory polymer composition in a compressed state.

**3.** The adhesive article (1) according to claim 1 or 2, wherein the at least one thermoplastic elastomer **TPE** has a melting temperature ($T_m$) determined by differential scanning calorimetry (DSC) according to ISO 11357 standard using a heating rate of 2 °C/min, which is above the glass transition temperature ($T_g$) determined by dynamical mechanical analysis (DMA) as the peak of the measured loss modulus (G") using a cyclic torsional load with a frequency of 1 Hz and a strain level of 1 % of the first curable adhesive.

**4.** The adhesive article (1) according to any one of previous claims, wherein the first curable adhesive has a glass transition temperature ($T_g$) determined by dynamical mechanical analysis (DMA) as the peak of the measured loss modulus (G") using a cyclic torsional load with a frequency of 1 Hz and a strain level of 1 % in the range of 23 - 105 °C.

**5.** The adhesive article (1) according to any one of previous claims, wherein the at least one epoxy resin **A1** comprises 20 - 75 wt.-%, preferably 25 - 65 wt.-% of the total weight of the shape memory polymer composition and/or the at least one thermoplastic elastomer **TPE** comprises 15 - 40 wt.-%, preferably 20 - 40 wt.-% of the total weight of the shape memory polymer composition.

**6.** The adhesive article (1) according to any one of previous claims, wherein the at least one thermoplastic elastomer **TPE** is selected from the group consisting of ethylene - $\alpha$-olefin copolymers, propylene - $\alpha$-olefin copolymers, and ethylene vinyl acetate copolymers.

**7.** The adhesive article (1) according to any one of previous claims, wherein the at least one thermoplastic elastomer is an ethylene - octene copolymer, preferably an ethylene - octene random copolymer.

**8.** The adhesive article (1) according to any one of previous claims, wherein the first curable adhesive further comprises: a3) At least one epoxy resin modified acrylonitrile - butadiene copolymer **C.**

**9.** The adhesive article (1) according to claim 8, wherein the at least one epoxy resin modified acrylonitrile - butadiene copolymer **C** comprises 1 - 30 wt.-%, preferably 2.5 - 25 wt.-% of the total weight of the shape memory polymer composition.

**10.** The adhesive article (1) according to any one of previous claims, wherein the shape memory polymer composition further comprises:

c) 1 - 35 wt.-%, preferably 2.5 - 30 wt.-% of at least one solid particulate filler **F1,** based on the total weight of the shape memory polymer composition.

**11.** The adhesive article (1) according to any one of previous claims, wherein the expandable layer (2) is obtainable by a process comprising steps of:

i) Providing the shape memory polymer composition in an original non-deformed shape, wherein the at least one thermoplastic elastomer **TPE** is in a relaxed state,
ii) Heating the shape memory polymer composition in its original non-deformed shape to a temperature, which is above the glass transition temperature ($T_g$) of the first curable adhesive and below the melting temperature ($T_m$) of the at least one thermoplastic elastomer **TPE,**
iii) Mechanically deforming the heated shape memory polymer composition from its original non-deformed shape to the temporary deformed shape, wherein the at least one thermoplastic elastomer **TPE** is in a compressed state, and
iv) Cooling the deformed shape memory polymer composition while keeping the deformation in place to a temperature below the glass transition temperature ($T_g$) of the first curable adhesive.

**12.** The adhesive article (1) according to any one of previous claims, wherein the first adhesive layer (3) is composed of a second curable adhesive comprising:

a') 25 - 75 wt.-%, preferably 30 - 70 wt.-%, based on the total weight of the second curable adhesive, of at least one epoxy resin **A2** having an average of more than one epoxy group per molecule,
b') At least one latent hardener **B2** for epoxy resins, and
c') Optionally at least one polymeric impact modifier **D.**

**13.** The adhesive article (1) according to claim 12, wherein the second curable adhesive comprises at least one polymeric impact modifier **D,** wherein the at least one polymeric impact modifier preferably comprises 1 - 40 wt.-%, preferably 5 - 30 wt.-% of the total weight of the second curable adhesive.

**14.** A method for producing an adhesive article according to any one of previous claims comprising steps of:

i') Providing a shape memory polymer composition containing the constituents as defined in any one of previous claims in an original non-deformed shape, wherein the at least one thermoplastic elastomer is in a relaxed state,
ii') Heating the shape memory polymer composition in its original non-deformed shape to a temperature, which is above the glass transition temperature ($T_g$) of the curable adhesive and below the melting temperature ($T_m$) of the at least one thermoplastic elastomer **TPE,**
iii') Mechanically deforming the heated shape memory polymer composition from its original non-deformed shape to the temporary deformed shape, wherein the at least one thermoplastic elastomer **TPE** is in a compressed state,
iv') Cooling the deformed shape memory polymer composition while keeping the deformation in place to a temperature below the glass transition temperature ($T_g$) of the curable adhesive to obtain an expandable layer composed of the shape memory polymer composition in the temporary deformed shape, and
v') Applying the first adhesive layer to at least a portion the first major surface of the expandable layer.

**15.** A method for bonding two substrates to each other, the method comprising steps of:

I) Providing an adhesive article (1) according to any one of claims 1-13 between a first and a second substrate (4, 5) spaced apart such that the first adhesive layer (3) is contacted with the first substrate (4),
II) Heating the adhesive article (1) to a temperature above the glass transition temperature ($T_g$) of the first curable adhesive causing the expandable layer (2) to increase its thickness, and
III) Curing the first and second curable adhesives.

**16.** A two-part bonded assembly (6) comprising a first substrate (4) and a second substrate (5) and adhesive article (1) according to any one of claims 1-13 provided between the first and second substrates (4, 5), wherein the first substrate (4) and the second substrate (5) are bonded to each other over at least part of their opposing surfaces via the adhesive article (1).

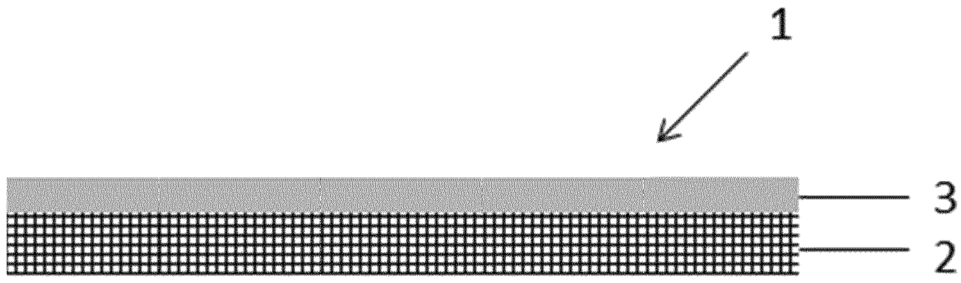


Fig. 1

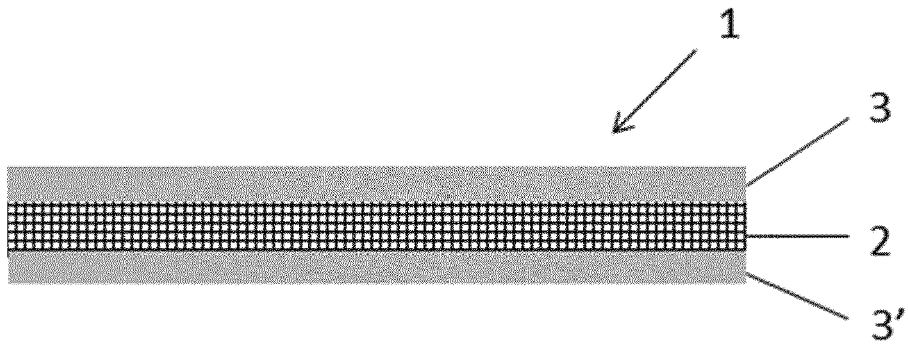


Fig. 2

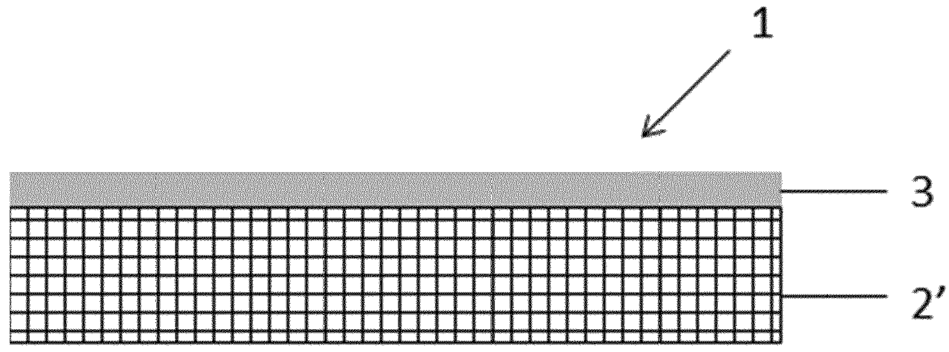


Fig. 3

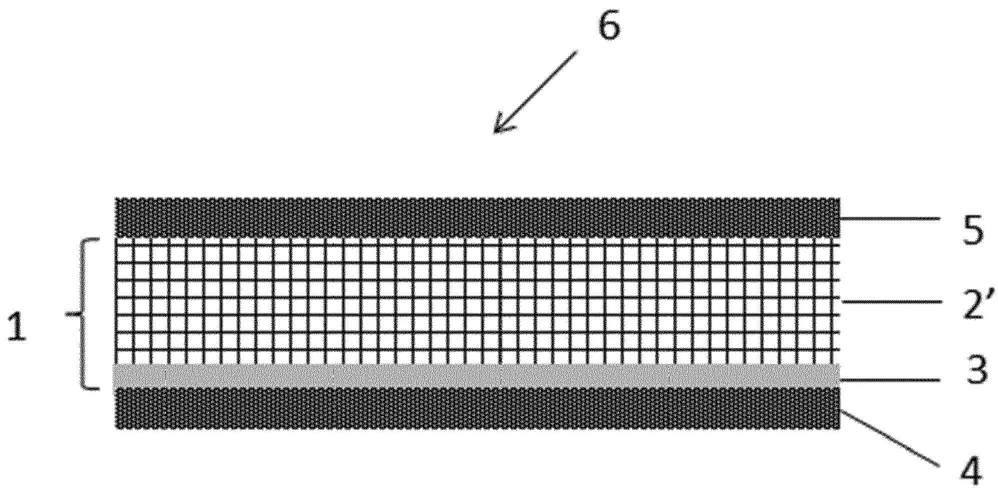


Fig. 4

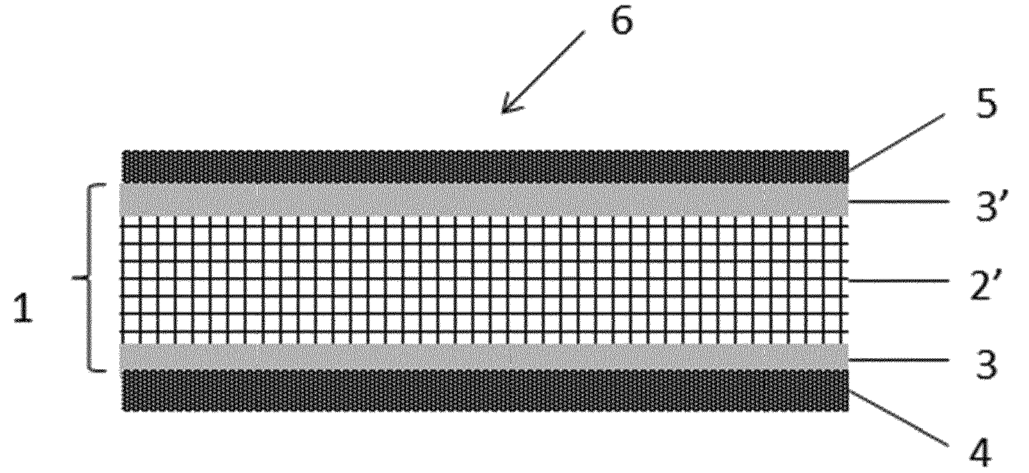


Fig. 5

Europäisches Patentamt
European Patent Office
Office européen des brevets

# EUROPEAN SEARCH REPORT

Application Number
EP 19 18 7947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/280330 A1 (XIE TAO [US] ET AL) 12 November 2009 (2009-11-12) * paragraphs [0026] - [0031]; claims 1-20 * | 1-16 | INV. C09J7/26 C09J7/38 C09J7/35 |
| Y | US 9 884 962 B2 (SIKA TECH AG [CH]) 6 February 2018 (2018-02-06) * column 3, line 22 - column 4, line 26; claims 1-24; figures 1-6; examples 1-6 * | 1-16 | |
| A | EP 3 156 465 A1 (3M INNOVATIVE PROPERTIES CO [US]) 19 April 2017 (2017-04-19) * paragraphs [0085], [0182] - [0186]; claims 1-15 * | 1-15 | |

TECHNICAL FIELDS SEARCHED (IPC)
C09J

1

The present search report has been drawn up for all claims

| Place of search | Date of completion of the search | Examiner |
|---|---|---|
| Munich | 30 January 2020 | Sperry, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 18 7947

This annex lists the patent family members relating to the patent documents cited in the above-mentioned European search report. The members are as contained in the European Patent Office EDP file on
The European Patent Office is in no way liable for these particulars which are merely given for the purpose of information.

30-01-2020

| Patent document cited in search report | Publication date | Patent family member(s) | Publication date |
|---|---|---|---|
| US 2009280330 A1 | 12-11-2009 | CN 101643632 A | 10-02-2010 |
| | | DE 102009035621 A1 | 11-03-2010 |
| | | US 2009280330 A1 | 12-11-2009 |
| US 9884962 B2 | 06-02-2018 | BR 112012024435 A2 | 24-09-2019 |
| | | CN 102869741 A | 09-01-2013 |
| | | EP 2368955 A1 | 28-09-2011 |
| | | EP 2553034 A1 | 06-02-2013 |
| | | JP 5990159 B2 | 07-09-2016 |
| | | JP 6495796 B2 | 03-04-2019 |
| | | JP 2013525515 A | 20-06-2013 |
| | | JP 2016041812 A | 31-03-2016 |
| | | KR 20130057986 A | 03-06-2013 |
| | | US 2013034736 A1 | 07-02-2013 |
| | | WO 2011117398 A1 | 29-09-2011 |
| EP 3156465 A1 | 19-04-2017 | CN 108350328 A | 31-07-2018 |
| | | EP 3156465 A1 | 19-04-2017 |
| | | US 2018298236 A1 | 18-10-2018 |
| | | WO 2017066517 A1 | 20-04-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9796809 B2
- WO 2017121826 A1